# EUROPEAN PATENT APPLICATION

(11) **EP 2 253 409 A1**
(43) Date of publication of application: **24.11.2010**
(21) Application number: 09425191.5
(22) Date of filing: 19.05.2009
(51) Int. Cl.: B23K 9/32

(54) **Kit of accessories to check wire feed motors and potentiometers of MIG/MAG, TIG and plasma welding torches**

(71) Applicant: Marin Celestino, Luigi, 20200 Cesate (MI) (IT)
(72) Inventor: Marin Celestino, Luigi, 20200 Cesate (MI) (IT)

(57) **Abstract**

The present invention consists of a kit of accessories to test good functioning of MIG/MAG, TIG and plasma welding torches wire feed motors and potentiometers. Accessories are in number of three: a dc static generator, a device regulation and a cage clamp terminal block to connect wire feed motors and potentiometers. The present invention allows tests which are safe, fast, accurate and easy to do, implementing a combination of analogic devices and bright leds.

## Description

### Application field

The present invention relates to particular kinds of controls which can be made in MIG/MAG, TIG and plasma welding torches. It involves a kit of accessories which scope is to verify the good functioning of wire feed motors and potentiometers of these torches. The accessories are originally made up to complete and operate with EASYCHECK machine (PCT/IT/2009/000096), a device for testing and checking welding torches (good functioning of gas feeding circuits, water and air cooled circuits, shielding gas circuits and electric circuits). However, for what strictly concerns testing of wire feed motors and potentiometers, the kit of accessories can operate without EASYCHECK, it is enough to connect the accessories with a 24 volt continuous generator.

In order to better understand the present invention, it's may be useful a brief description of MIG/MAG, TIG and plasma welding torches. MIG (**M**etal-arc **I**nert **G**as) e MAG (**M**etal-arc **A**ctive **G**as) are welding processes in which a continuos and consumable wire and shielding gas are fed through a welding torch. A little motor provides continuously wire and the wire itself acts both as electrode and filling material. The base material (the piece that must be welded) it's the second elecrtode. An electric arc is created between the two electrodes, it causes intensive heat and the wire is melted at the welding point. The functioning of the torch is ensured by welding power supply (generally a direct current generator) which provides current for wire feed motors, gas circuits, electric arc and other devices). The shielding gas is necessary to protect the welding area from atmospheric gases. Shielding gases fall into two categories: inert gas (MIG torches) and active gas (MAG torches). Inert gas provides only a protection from atmospheric gases, active gas provides protection from atmospheric gases and improves the the welding process. TIG (Tungsten Inert Gas) torches are very similar to MIG/MAG ones, they are based on electrical arc welding too, the main differences with MIG/MAG welding are that in TIG welding the electrode is not consumable and it's made of tungsten, therefore typically is used only inert gas. The filler material can be provided by the torch itself like in MIG/MAG welding or eternally by other devices. Finally plasma welding is also based on electric arc. Plasma torches are typically used to cut materials Plasma is a gas which is heated to an extremely high temperature and ionized, so that it becomes electrically conductive.

Likewise TIG torches, electric arc is formed between a not consumable electrode, which is usually, but not always, made of tungsten, and the workpiece.

For what concerns the present invention we focus on particular welding torches devices: the wire feed motor and the potentiometer. As we already said the wire feed motor ensures continuous consumable filler material which melts in the electric arc heat. For what concerns the present invention a potentiometer is a device which allows to adjust current intensity according with specific parameters, which are related to the material to be welded (kind of material, thickness of material, and so on). Typically users of welding torches can change potentiometer status acting by sliding contact as a cursor, a knob or a foot pedal.

### State of the art

By now there are not specific devices or accessories to test wire feed motors and potentiometers. For example, in ordet to test a wire feed motor, the user could connect the torch to its welding supply power. However welding suplly power normally is an heavy and bulky machine, and it could be uneasy to carry it in the place in which tests and maintenances are done (or to carry any torches to the supply power). Alternatively a welding supply power could be kept in the place where tests and maintenances are done, but it would be an expensive solution. Therefore, connecting the torch to power supply no information is provided about the status of motor, except for the fact that motor works or not. Finally it could be the case that not every welding power supply is provided with safety devices to prevent short-circuit or damnages depending on malfunctions of the motor itself. For what concerns potentiometers, the test should verify the progressive correspondence between the movement of the sliding contact and intensity of the current. To verify this correspondence a user could operate with a milliamperometer, a very sensitive amperometer graduated in milliamperes. It can measure the flow of electrical current in milliamperes. The problem is that measuring instantantaneous current changes by a milliaperometer involves particular devices and techniques which can be implemented only by a skilled user.

The target of the present invention is to test functioning of wire feed motors and potentiometers and to make these tests safe, fast, accurate and easy.

### Brief description

The object of the present invention is a kit of accesories for testing MIG/MAG and plasma torches wire feed motor and potentiometers. The accessories are three:
- a dc static generator fed by network 220 vac (volts of alternating current), which provides 24 vdc (volts of direct current) voltage. The static dc generator can feed torches motors and it's involved in wire feed motors tests.
- a regulation device, fed by any 24 vdc supply power. The regulation device is involved in potentiometers tests.
- a "cage clamp" terminal block to quickly connect or disconnect plugs or wiring of welding torches.

Three accesories configurations are possible:
- any 24vdc supply power + regulation device + dc static generator + terminal block; for testing both wire feed motors and potentiometers
- any 24vdc supply power + regulation device + terminal block; for testing potentiometers
- dc static generator + terminal block; for testing wire feed motors

It's the case to underline that in the drawings are represented only two embodiments of the three theoric configurations. However, since the first configuration contains all the accessories and functions, the sole first configuration is enough to understand the present invention. For what concern the connections in the first configuration, regulation device is connected to dc static generator by a female five pin mini-din connector, the dc static generator is connected to cage clamp terminal block by a female C091 six pin connector. For what concerns the second configuration the regulation device is directly connected to cage clamp terminal block by a female 6 pin mini-din connector.

### Brief description of the drawings

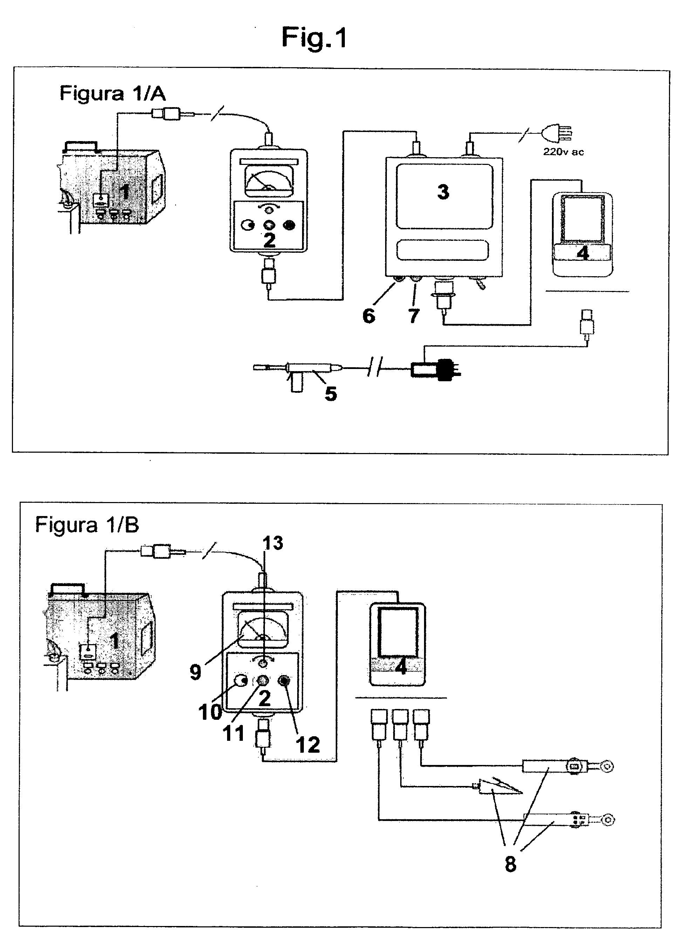

Fig. 1 is a schematic drawing of two embodiments of the three theoric configurations. In fig. 1A is represented the first configuration useful for testing wire feed motors or potentiometers, in this figure are connected in series: any 24vdc supply power fig. 1A(1); regulation device fig. 1A(2); dc static generator fig. 1A(3); terminal block fig. 1A(4); welding torch fig. 1A(5). In fig. 1A the focus is on the static cd generator and are represented the red led and the green led fig. 1A(6) and 1A(7). In fig. 1B is represented the second configuration for testing potentiometers in this figure are connected in series: any 24vdc supply power fig. 1B(1); regulation device fig. 1B(2); terminal block fig. 1B(4); potentiometers sliding contacts fig. 1B(8). In this figure the focus is on regulation device and are also represented the pointer of the milliamperometer fig. 1B(9), electric switch lever fig. 1B(10), yellow led fig. 1B(11), milliamperometer reset-button fig. 1B(12), milliamperometer calibration trimmer 1B(13)
In fig. 2 is represented the circuit diagram of the dc static generator.
In fig. 3 is represented the circuit diagram of the regulation device.

### Detailed description

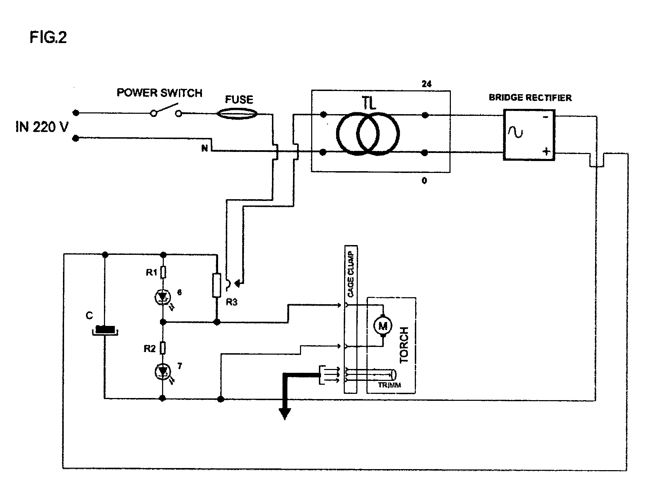

Referring to fig.1A and fig. 2 we can analize the functioning of the dc static generator. As we said dc static generator is connected to network 220 vac and provides 24vdc too feed wire feed motors. The power switch (fig.2) is connected in series with a fuse (fig.2) which can interrupt excessive current to prevent damages, fuse outgoing contact is connected to block-reinsertion thermostat which interrupts primary current if the r3 resistor exceeds 90 °C. The outgoing thermostat connection is connected to first incoming link of transformer TL, the neutral N is connected with second incoming link of the trasformer TL. The outgoing connections of the trasformer TL are connected to the Bridge Rectifier, which provides for rectifying incoming current. From Bridge Rectifier the negative circuit is connected to one of the pin of C091 connector, which is connected to wire feed motor by the cage clamp terminal block. Negative circuit is also connected to green led 7 cathod and to electrolytic condenser C, which acts as current stabilizer. From Bridge Rectifier the positive circuit is connected to positive pole of electrolytic condenser C and to r1 resistor, which limits current reaching red led 6. The outgoing connection of R1 resistor is connected to red led 6 anode, red led 6 cathod is connected to r2 resistor which limits current reaching green led 7, red led 6 cathod is also connected to another pin of C091 connector, which is connected to wire feed motor M by cage clamp terminal block. Finally the outgoing r2 resistor connection is connected to green led 7 anode.

Thank to green and red leds the user can immetiately have informations about wire feed motor status. The green led signals that current is feeding the circuit, the red led signals short-circuits. It means that:
- when only green led is lighted the circuit is fed by current but motors doesn't work, it coulb be the case of mechanic damages of the motor or the case of wires interruption.
- When both red and green leds are lighted the circuit is fed by current and motor works regularly.
- When only red led is lighted the circuit is not fed by current, it could be the case of short circuits.

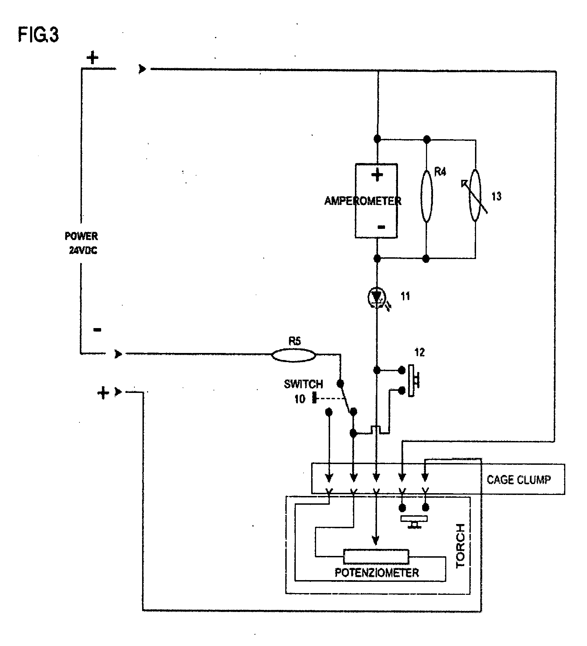

Referring to fig.1B and fig. 3 we can analize the functioning of regulation device. The regulation device 2 is fed by any 24vdc supply power. The outgoing positive circuit is connected to analogic milliamperometer, to r4 resistor and to calibration trimmer 13. The r4 resistor acts to shunt current that reachs milliamperometer, calibration trimmer is manually controlled. The outgoing r4 resistor, trimmer and milliamperometer connections are connected to yellow led 11 anode. Yellow led 11 cathod is connected to milliamperometer reset-button 12 and to one pin of the six pin mini-din plug, which is connected to potentiometer by cage clamp terminal block. The other link of reset-button 12 is connected to one lateral connection of the switch and to another pin of the six pin mini-din plug. Second lateral switch connection is connected to another pin of the six pin mini-din plug and finally central switch connection is connected to r5 resistor which limits current passage in potentiometer. The outgoing r5 resistor connection is connected to 24vdc circuit. The switch allows to change potentiometer connections by lever 10.

Regulation device allows to measure exactly current intensity in ampere by analogic pointer 7 of the milliamperometer. The yellow led 11 allows to read variation in intensity current when user acts by the sliding contact 8 of the potentiometer, the yellow led become brighter and brighter according to the intensity current grow. Use of bright led is very important, infact milliamperometers have a latency and doesn't react immediately to current changes.

## Claims

1. A kit of accessories to test good functioning of MIG/MAG, TIG and plasma welding torches wire feed motors and potentiometers **characterized in that** is based on three devices:
- a dc static generator (3) to feed wire feed motors and to test good functioning of said motors. The dc static generator is connected to netwotk 220 vac and provides 12 vdc.
- a regulation device (2) to test good functioning of MIG/MAG, TIG and plasma welding torches potentiometers. The regulation device is fed by any 24 vdc supply power.
- a cage clamp terminal block (4) to connect wires or plugs of wire feed motors and potentiometers.

2. A kit of accessories to test good functioning of MIG/MAG, TIG and plasma welding torches wire feed motors and potentiometers as claimed in claim 1, **characterized in that** three configurations are possible according to what must be tested: wire feed motors and potentiometers, only potentiometers, only wire feed motors.

3. A kit of accessories to test good functioning of MIG/MAG, TIG and plasma welding torches wire feed motors and potentiometers as claimed in claims 1 and 2, **characterized in that** good functioning of wire feed motors and electrical circuits is signaled by on-off combinations of two bright leds.

4. A kit of accessories to test good functioning of MIG/MAG, TIG and plasma welding torches wire feed motors and potentiometers as claimed in claim 3, **characterized in that** good functioning of wire feed motors and electrical circuits can be signaled by on-off combinations of two or more bright leds.

5. A kit of accessories to test good functioning of MIG/MAG, TIG and plasma welding torches wire feed motors and potentiometers as claimed in claims 1 and 2, **characterized in that** good functioning of potentiometers is signaled by both an analogic milliamperometer and a bright led which become brighter and brighter according to intensity current passing in the potentiometers.

6. A kit of accessories to test good functioning of MIG/MAG, TIG and plasma welding torches wire feed motors and potentiometers as claimed in claims 5, **characterized in that** good functioning of potentiometers is signaled by a combination of undefined number of analogic milliamperometers and undefined number of bright leds, which become brighter and brighter according to intensity current passing in the potentiometers.

7. A kit of accessories to test good functioning of MIG/MAG, TIG and plasma welding torches wire feed motors and potentiometers as claimed in any of previous claims, **carachterized in that** the accessories can be grouped in one or two devices or didvided in four or more devices preserving the same features.
